# EUROPÄISCHE PATENTANMELDUNG

(11) **EP 2 439 305 A1**
(43) Veröffentlichungstag der Anmeldung: **11.04.2012**
(21) Anmeldenummer: 11179886.4
(22) Anmeldetag: 02.09.2011
(51) Int. Cl.: C23C 4/00, C23C 4/12, F01D 5/00, F01D 5/28, C23C 24/04

(54) **Thermisches Spritzverfahren mit Freihalten von Kühlluftbohrungen**

(30) Priorität: 07.10.2010 EP 10186831
(71) Anmelder: Sulzer Metco AG, 5610 Wohlen (CH)
(72) Erfinder: von Niessen, Konstantin, Dr., 5632 Buttwil (CH); Schmid, Richard C., Dr., 8500 Gerlikon (CH); Gindrat, Malko, Dr., 5610 Wohlen (CH); Usai, Sascha, 5620 Bremgarten (CH)
(74) Vertreter: Sulzer Management AG

(57) **Zusammenfassung**

Es wird ein Verfahren vorgeschlagen zum Beschichten einer Fläche (10) eines Körpers (1), welcher mindestens eine durchgängige Bohrung (5) mit einem Einlass (51) und mit einem Auslass (52) aufweist, wobei der Auslass (52) in der zu beschichtenden Fläche (10) vorgesehen ist, bei welchem Verfahren das Beschichten mittels thermischen Spritzens erfolgt, wobei während des thermischen Spritzens die Bohrung (5) von einem Fluid durchströmt wird, welches durch den Auslass (52) der Bohrung (5) ausströmt und eine durch das Beschichten verursachte Verengung der Bohrung (5) im Wesentlichen verhindert.

## Beschreibung

Die Erfindung betrifft ein Verfahren zum Beschichten einer Fläche eines Körpers gemäß dem Oberbegriff des unabhängigen Verfahrensanspruchs. Die Erfindung betrifft ferner eine Turbinenschaufel die gemäss einem solchen Verfahren beschichtet ist.

Bei Turbinenschaufeln, insbesondere bei den thermisch oder korrosiv sehr stark belasteten Turbinenschaufeln von Gasturbinen wie sie als landgestützte Industrieturbinen oder als Flugzeugtriebwerke eingesetzt werden, ist es heute eine übliche Massnahme, die Turbinenschaufel mit Kühlluftbohrungen zu versehen, die sich durch die Schaufel hindurch erstrecken und in die äussere Oberfläche der Turbinenschaufel einmünden. Während des Betriebs der Turbine wird dann ein Kühlmedium, meistens Luft, durch die Kühlluftbohrungen geführt, die dann an der Oberfläche der Turbinenschaufel austritt und für eine Kühlung sorgt. Dabei wird häufig auch eine sogenannte Filmkühlung realisiert, d.h. das aus alle den Kühlluftbohrungen austretende Fluid bildet einen schützenden Gas- oder Dampffilm auf der Oberfläche der Turbinenschaufel, welcher die thermische Belastung der Schaufel deutlich reduziert.

Probleme ergeben sich insbesondere, wenn solche bereits mit Kühlluftbohrungen versehenen Bauteile - sei bei der Reparatur bzw. Wartung oder sei es bei der Neuherstellung - mittels eines thermischen Spritzverfahrens beschichtet werden sollen. Derartige Beschichtungen werden häufig als thermische Schutzschichten oder als Schutz gegen (Heiss-) Korrosion auf die Turbinenschaufeln aufgebracht.

Beim thermischen Spritzen kann sich nun Beschichtungsmaterial in den Öffnungen der Kühlluftbohrungen absetzen und deren Strömungsquerschnitt deutlich verengen, bzw. können sich die Öffnungen vollständig zusetzen. Dies hat natürlich einen sehr nachteiligen Einfluss auf die im Betrieb erzielte Kühlwirkung. Daher müssen die Kühlluftbohrungen in einem weiteren Bearbeitungsschritt von unerwünschtem Beschichtungsmaterial befreit werden.

Dieses Problem ist besonders ausgeprägt bei Bohrungen mit sehr geringem Durchmesser von beispielsweise weniger als einem Millimeter Durchmesser. Insbesondere besteht bei der bereits erwähnten Filmkühlung die Tendenz mehrere und kleinere, d.h. engere Kühlluftbohrungen vorzusehen, beispielsweise um einen möglichst homogen Fluidfilm auf der Schaufeloberfläche zu realisieren. Bei diesem Kühlprinzip ist es sehr wichtig, dass tatsächlich alle Kühlluftbohrungen offen bleiben.

Auch allgemein muss beim thermischen Spritzen von Flächen, in welche solche Kühlluftbohrungen münden, dafür gesorgt werden, dass die Bohrungen sich nicht zusetzen oder ihr Strömungsquerschnitt reduziert wird. Nur so lässt sich eine einwandfreie Kühlleistung erzielen.

Es sind bereits verschiedene Massnahmen vorgeschlagen worden, dieses Problem zu lösen. In der WO-A-2010/078994 wird beispielsweise vorgeschlagen, vor dem thermischen Beschichten ein Maskierungsmaterial, vorzugsweise ein Polymer in das Kühlloch bzw. in die Auslassöffnung der Kühlluftbohrung einzubringen. Dieses Maskierungsmaterial wird vor dem Beschichten ausgehärtet, beispielsweise durch Beaufschlagungmit UV-Strahlung. Nach dem Beschichtungsvorgang muss dann das Maskierungsmaterial in einem weiteren Bearbeitungsschritt wieder entfernt werden, wobei gewährleistet sein muss, dass das Maskierungsmaterial wirklich vollständig entfernt wird. Dies ist eine aufwändige Prozedur, insbesondere bei sehr dünnen Bohrungen.

Ausgehend von diesem Stand der Technik ist es daher eine Aufgabe der Erfindung, ein Verfahren vorzuschlagen, mit welchem ein Beschichten einer Fläche ermöglicht wird, wobei der Strömungsquerschnitt von Bohrungen, welche in die zu beschichtende Fläche einmünden, im Wesentlichen konstant gehalten werden kann. Ferner soll durch die Erfindung eine derartig beschichte Turbinenschaufel vorgeschlagen werden.

Die diese Aufgabe lösenden Gegenstände der Erfindung sind durch den unabhängigen Anspruch der jeweiligen Kategorie gekennzeichnet.

Erfindungsgemäss wird also ein Verfahren vorgeschlagen zum Beschichten einer Fläche eines Körpers, welcher mindestens eine durchgängige Bohrung mit einem Einlass und mit einem Auslass aufweist, wobei der Auslass in der zu beschichtenden Fläche vorgesehen ist, bei welchem Verfahren das Beschichten mittels thermischen Spritzens erfolgt, wobei während des thermischen Spritzens die Bohrung von einem Fluid durchströmt wird, welches durch den Auslass der Bohrung ausströmt und eine durch das Beschichten verursachte Verengung der Bohrung im Wesentlichen verhindert.

Durch die Massnahme, während des thermischen Spritzens ein Fluid durch die Bohrung strömen zu lassen, wird das Beschichtungsmaterial durch das durch den Auslass austretende Fluid daran gehindert, in die Bohrung einzudringen bzw. sich in der Bohrung abzusetzen. Auf diese Weise wird verhindert, dass der Strömungsquerschnitt der Bohrung beim thermischen Spritzen reduziert wird oder das sich die Bohrung sogar ganz zusetzt. Der besondere Vorteil dieses Verfahren liegt darin, dass nach dem thermischen Spritzen kein zusätzlicher Bearbeitungsschritt notwendig ist, um die Bohrung zu öffnen oder wieder auf den gewünschten Durchmesser zu erweiteren oder von ausgehärtetem Maskierungsmaterial zu befreien.

Vorzugsweise ist das Fluid ein Gas, weil sich damit der Fluidfluss besser kontrollieren lässt, grundsätzlich ist aber auch eine Flüssigkeit als Fluid einsetzbar, beispielsweise auch eine Flüssigkeit, welche dann als Dampf aus dem Auslass austritt. Im Hinblick auf die Vermeidung unerwünschter chemischer Reaktionen ist das Fluid insbesondere bevorzugt ein Edelgas, speziell Argon, weil dieses häufig als Prozessgas in thermischen Spritzverfahren Anwendung findet.

Die Flussrate, mit welcher das Fluid die Bohrung bzw. die Gesamtheit aller Bohrungen durchströmt hängt natürlich von den jeweilgen Prozessparametern ab und kann auf den Anwendungsfall optimiert werden. Insbesondere bei Prozessen im Unterdruckbereich hat es sich in der Praxis bewährt, wenn die Flussrate des Fluids höchstens 5 SLPM (Standardliter pro Minute) ist und vorzugsweise höchstens 1 SLPM beträgt.

In einem bevorzugten Anwendungsfall ist das thermische Spritzen ein Plasmaspritzverfahren.

Besonders gut geeignet ist das erfindungsgemässe Verfahren wenn das thermische Spritzen ein Plasmaspritzverfahren ist, das bei einem Prozessdruck durchgeführt wird, der kleiner als 10 000 Pa beträgt. Speziell geeignet sind LPPS-Verfahren (LPPS = Low Pressure Plasma Spraying), insbesondere solche, bei welchen für den Prozessdruck ein Wert zwischen 50 und 2000 Pa, vorzugsweise zwischen 100 und 800 Pa gewählt wird.

In einer speziellen, für die Praxis relevanten Ausführung des LPPS-Verfahrens wird ein Ausgangsmaterial für das Beschichten in Form eines Prozessstrahls auf den Körper aufgespritzt, wobei das Ausgangsmaterial in ein den Prozessstrahl defokussierendes Plasma injiziert und dort teilweise oder vollständig in eine flüssige Phase übergeht und wobei das Beschichten durch Abscheidung aus der flüssigen Phase erfolgt. Dieses Verfahren wird auch als LPPS-TF- Verfahren bezeichnet, wobei TF für "Thin Film" steht

Eine weitere für die Praxis sehr relevante Ausführungsform ist ein LPPS-Verfahren mit Abscheidung aus der Gasphase. Dabei wird ein Ausgangsmaterial für das Beschichten in Form eines Prozessstrahls auf den Körper aufgespritzt, wobei das Ausgangsmaterial in ein den Prozessstrahl defokussierendes Plasma injiziert und dort zumindest teilweise in eine gasförmige Phase übergeht und wobei das Beschichten durch Abscheidung aus der gasförmigen Phase erfolgt. Manchmal wird auch für dieses Verfahren die Bezeichnung LPPS-TF verwendet, da es sich aber um eine -zumindest teilweise- Abscheidung aus der Gas- bzw. Dampfphase handelt, wird für dieses Verfahren auch die Bezeichnung PS PVD (Plasma Spray Physical Vapor Deposition) verwendet.

Insbesondere geeignet ist das erfindungsgemässe Verfahren für die Beschichtung von Turbinenschaufeln, die eine oder mehrere Kühlluftbohrungen aufweisen. Dann ist der Körper eine Turbinenschaufel und die mindestens eine Bohrung eine Kühlluftbohrung.

Vorzugsweise weist die Turbinenschaufel einen Fuss auf, der während des Beschichtens mit einer Quelle für das Fluid verbunden ist, sodass das Fluid vom Fuss der Turbinenschaufel durch die mindestens eine Kühlluftbohrung zu dem Auslass der Kühlluftbohrung strömen kann.

Besonders geeignt ist das Verfahren, wenn die Turbinenschaufel eine Mehrzahl von Kühlluftbohrungen aufweist, welche von dem Fluid durchströmt werden.

Durch die Erfindung wird ferner eine Turbinenschaufel vorgeschlagen, die beschichtet gemäss dem erfindungsgemässen Verfahren beschichtet ist.

Bei einer Ausführungsvariante mündet die Kühlluftbohrung schräg in die zu beschichtende Fläche ein. Es ist natürlich auch möglich das die Kühllustbohrung im Wesentlichen im wesentlichen senkrecht in die zu beschichtende Fläche einmündet. Auch Kombinationen dieser beiden Varianten sind möglich.

Bei einem bevorzugten Ausführungsbeispiel der Turbinenschaufel nimmt die Dicke der Beschichtung mit zunehmender Entfernung vom Auslass der Bohrung zu, bis sie ihren maximalen Wert erreicht hat. Durch den bei der Beschichtung austretenden Fluidstrom ist es für das Beschichtungsmaterial schwieriger sich in unmittelbarer Nähe des jeweiligen Auslasses abzulagern als etwas weiter entfernt, wo die Strömung schon schwächer ist. Durch diese Zunahme der Schichtdicke wird der Übergang vom Auslass der Bohrung zur Oberfläche des Körpers nicht mehr so scharf bzw. scharfkantig, sondern etwas abgeschrägt bzw. abgerundet. Dies ist für den Betrieb der Turbinenschaufel vom Strömungsverhalten der Kühlluft her gesehen vorteilhaft. Insbesondere bei Filmkühlungen lässt sich hierdurch ein noch homogenerer Kühlfilm an der Oberfläche der Turbinenschaufel realisieren.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1: eine Schnittdarstellung einer fluidgekühlten Turbinenschaufel
- Fig. 2: eine Querschnittdarstellung eines Ausschnitts aus der Wandung einer gasgekühlten Turbinenschaufel, welche gemäss einem Ausführungsbeispiel des erfindungsgemässen Verfahrens beschichtet ist, mit einer als Kühlluftbohrung dienenden Bohrung, und
- Fig. 3: wie Fig. 2, jedoch für eine andere Bohrung.

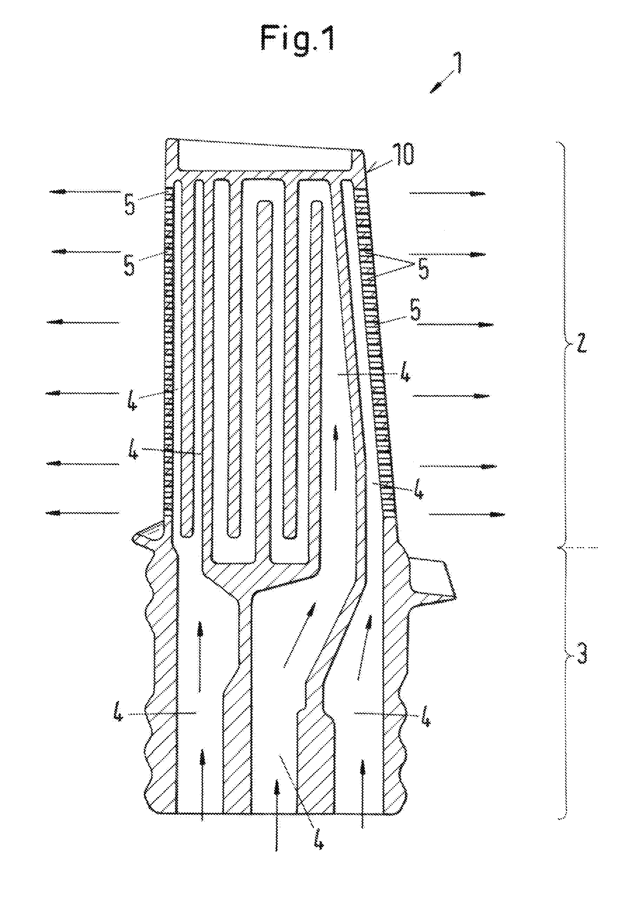

Das erfindungsgemässe Verfahren dient zum Beschichten einer Fläche eines Körpers, welcher mindestens eine durchgängige Bohrung aufweist, welche in die zu beschichtende Fläche einmündet. Im Folgenden wird mit beispielhaftem Charakter auf den für die Praxis besonders wichtigen Anwendungsfall Bezug genommen, dass der Körper eine Turbinenschaufel 1 (siehe Fig. 1) ist, welche im Betrieb gasgekühlt ist.

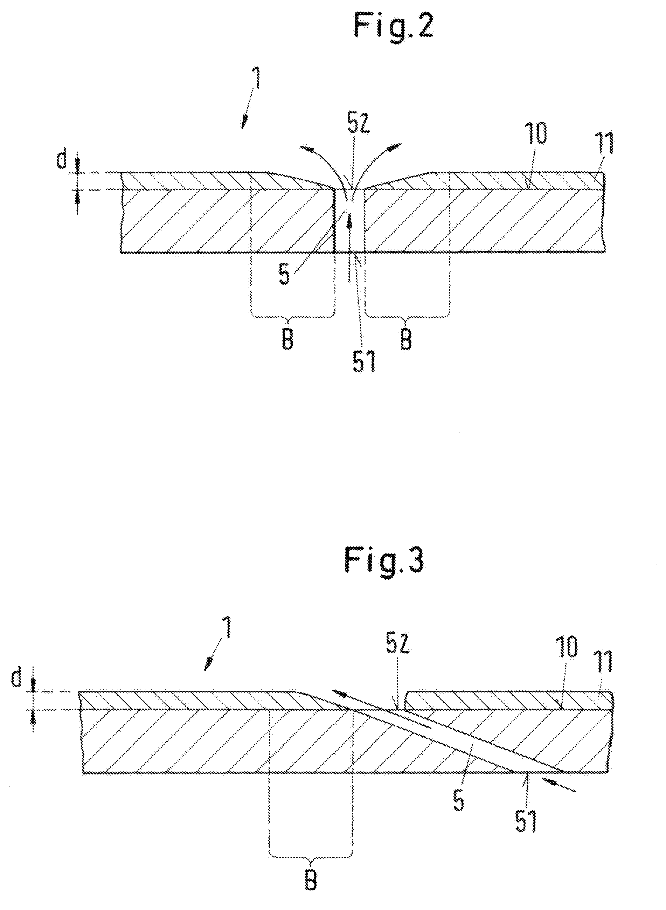

Fig. 1 zeigt in einer Längsschnittdarstellung ein Ausführungsbeispiel einer gasgekühlte Turbinenschaufel 1, wie sie an sich vom Stand der Technik her bekannt ist. Die Turbinenschaufel 1 umfasst ein Turbinenblatt 2 und einen Fuss 3, mit welchem die Turbinenschaufel 1 auf dem Rotor bzw. auf der Nabe montiert wird. Im Inneren der Turbinenschaufel 1 sind typischerweise mehrere Kühlluftkanäle 4 vorgesehen, welche im Betrieb der Turbine von einem Gas - üblicherweise Luft - durchströmt werden, um die Turbinenschaufel 1 zu kühlen. Der Strömungsverlauf der Kühlluft ist in Fig. 1 durch die Pfeile ohne Bezugszeichen veranschaulicht. Von den Kühlluftkanälen 4 erstreckt sich eine Vielzahl von Kühlluftbohrungen 5 durch die Wandung der Turbinenschaufel 1, sodass die Kühlluft an der Oberfläche 10 der Turbinenschaufel 1 austreten kann. Jede Kühlluftbohrung 5 hat einen Einlass 51 (siehe Fig. 2), durch welchen die Kühlluft in die Bohrung 5 hinein gelangt und einen in der äusseren Oberfläche 10 der Turbinenschaufel 1 gelegenen Auslass 52, durch welchen die Kühlluft aus der Bohrung 5 herausströmt.

Wie bereits erwähnt, ist das erfindungsgemässe Verfahren nicht auf die Beschichtung von Turbinenschaufeln beschränkt, sondern eignet sich ganz allgemein zum Beschichten einer Fläche 10 eines Körpers 1, welcher mindestens eine durchgängige, d.h. von einem Fluid durchströmbare, Bohrung 5 mit einem Einlass 51 und und einem Auslass 52 aufweist, wobei der Auslass 52 in der zu beschichtenden Fläche 10 vorgesehen ist. Ein solcher Körper kann beispielsweise auch ein rohrförmiger Körper sein, dessen äussere Oberfläche zu beschichten ist, und dessen Wandung mit mehreren Bohrungen 5 versehen ist.

Bei dem erfindungsgemässen Verfahren wird die Fläche 10 des Körpers 1, hier die Oberfläche 10 der Turbinenschaufel 1 mittels thermischen Spritzens beschichtet. Erfindungsgemäss wird während des thermischen Spritzens die Bohrung 5 von einem Fluid durchströmt, welches durch den Auslass 52 der Bohrung 5 ausströmt und so eine durch das Beschichten verursachte Verengung des Auslasses 52 bzw. der Bohrung 5 im Wesentlichen verhindert. Durch das während des thermischen Spritzvorgangs austretende Fluid wird zumindest weitestgehend verhindert, dass sich Beschichtungsmaterial im Auslass 52 oder in der Bohrung 5 ablagert. Somit bleibt der Strömungsquerschnitt der Bohrung 5 erhalten, auch nach dem Beschichten hat die Bohrung 5 noch den gleichen Strömungsquerschnitt wie vor dem Beschichten.

Es werden also während des thermischen Spritzens dieselben Kühlluftkanäle 4 bzw. Kühlluftbohrungen 5 für das durchströmende Fluid verwendet wie sie beim normalen Betrieb der Turbine für das Kühlmedium verwendet werden.

Das erfindungsgemässe Verfahren eignet sich für alle thermischen Spritzverfahren, wie beispielsweise Flammspritzen, Hochgeschwindigkeitsflammspritzen (HVOF), Lichtbogenspritzen, z. B. Drahtlichtbogenspritzen, Laserspritzen, Kaltgasspritzen sowie alle Plasmaspritzverfahren, z.B. Plasmaspritzen bei Normaldruck (APS), Plasmaspritzen im Unterdruck (VPS) oder unter Schutzgasatmosphäre.

Als Fluid für das Durchströmen der Bohrung 5 während des Beschichtungsvorgangs wird vorzugsweise ein Gas und speziell ein Edelgas verwendet. Durch die Verwendung eines Edelgases lässt es sich vermeiden, dass es während des thermischen Spritzens zu ungewollten chemischen Reaktionen kommt, welche durch das aus den Bohrungen 5 ausströmende Fluid verursacht werden können. Ein besonders bevorzugtes Gas ist Argon, weil dieses Edelgas in vielen Spritzprozessen als Prozessgas Verwendung findet.

Die Flussrate, mit welcher das Fluid während des thermischen Beschichtens aus der Bohrung 5 bzw. den Bohrungen 5 ausströmt, kann je nach Anwendungsfall und je nach dem thermischen Spritzverfahren angepasst werden. Die Flussrate sollte einerseits so gross gewählt werden, dass ein Ablagern des Beschichtungsmaterials in der Bohrung verhindert wird. Andererseit soll die Flussrate nur so gross gewählt werden, dass sie nicht zu einer deutlichen Verschlechterung des Beschichtungsprozesses führt.

In der Praxis haben sich speziell für Plasmaspritzverfahren im Unterdruckbereich bei Verwendung von Argon Flussraten von höchstens 5 SLPM (Standardliter pro Minute) und speziell von höchsten 1 SPLM bewährt.

Anhand der Fig. 2 und 3 wird nun eine spezielle Ausführungsform des erfindungsgemässen Verfahrens erläutert, bei welcher zum thermischen Spritzen ein LPPS-Verfahren eingesetzt wird (LPPS: Low Pressure Plasma Spraying) Dieses Verfahren wird gattungsgemäss in der WO-A-03/087422 beschrieben. Bei dem dort beschriebenen Verfahren handelt es sich um eines, das dort auch als LPPS-Dünnfilm-Prozess (LPPS-TS = LPPS Thin Film) bezeichnet wird. Mit dem LPPS-Dünnfilm-Prozess wird ein konventionelles LPPS-Plasmaspritzverfahren verfahrenstechnisch abgewandelt, wobei ein von Plasma durchströmter Raum ("Plasmaflamme" oder "Plasmastrahl") aufgrund der Änderungen ausgeweitet und auf eine Länge von bis zu 2.5 m ausgedehnt wird. Die geometrische Ausdehnung des Plasmas führt zu einer gleichmässigen Aufweitung - einer "Defokussierung" - eines Pulverstrahls, der mit einem Fördergas in das Plasma injiziert wird. Das Material des Pulverstrahls, das im Plasma zu einer Wolke dispergiert und dort teilweise oder vollständig geschmolzen wird, gelangt gleichmässig verteilt auf eine weit ausgedehnte Oberfläche des zu beschichtenden Körpers.

In der WO-A-03/087422 wird offenbart, dass ein Plasma mit ausreichend hoher spezifischer Enthalpie erzeugt wird, sodass ein substanzieller Anteil des Beschichtungsmaterials in die Dampfphase übergeht und aus der Dampfphase auf der zu beschichtenden Fläche abgeschieden wird. Bezüglich der Plasmaparameter und der Einzelheiten des Verfahrens wird hier auf die WO-A-03/087422 verwiesen.

Ein wesentlicher Aspekt des in der WO-A-03/087422 offenbarten Verfahrens besteht darin, dass ein wesentlicher Anteil des Beschichtungsmaterials aus der Dampfphase heraus auf dem zu beschichtenden Körper abgeschieden wird. Da dieses Verfahren nicht unbedingt für die Erzeugung dünner Schichten ausgerichtet ist, wird es heute häufig anstelle von LPPS-TF-Verfahren auch als PS PVD-Verfahren bezeichnet (PS PVD: Plasma Spray Physical Vapor Deposition), während der Begriff LPPS-TF-Verfahren für solche Verfahren verwendet wird, bei denen dünne Schichten von weniger als beispielsweise 50 Mikrometer erzeugt werden, wobei die Abscheidung üblicherweise aus der flüssigen Phase erfolgt, d.h. das Beschichtungsmaterial gelangt in Form kleiner Tröpfchen auf die zu beschichtende Oberfläche.

Bei dem anhand der Fig. 2 und 3 erläuterten Ausführungsform des erfindungsgemässen Verfahrens wird als thermisches Spritzen ein PS PVD-Verfahren eingesetzt wie es beispielsweise in der bereits zitierten WO-A-03/087422 offenbart wird (dort aber als LPPS-TF bezeichnet), d.h. die Abscheidung des Beschichtungsmaterials auf der zu beschichtenden Oberfläche 10 erfolgt zumindest zu einem wesentlichen Anteil von mindestens 50% der auf der Oberfläche 10 abgeschiedenen Beschichtung aus der Gasphase.

Fig. 2 zeigt eine Querschnittdarstellung eines Ausschnitts aus der Wandung einer gasgekühlten Turbinenschaufel 1, welche gemäss einem solchen Ausführungsbeispiel des erfindungsgemässen Verfahrens beschichtet ist, mit der als Kühlluftbohrung dienenden Bohrung 5. Die Bohrung 5 mündet mit ihrem Auslass 52 im Wesentlichen senkrecht in die zu beschichtende Oberfläche 10 der Turbinenschaufel 1. Fig. 3 zeigt in einer zu Fig. 2 analogen Darstellung eine Bohrung 5, die schräg - also nicht rechtwinklig - in die zu beschichtende Oberfläche 10 einmündet. Sowohl Fig. 2 als auch Fig. 3 zeigen die Turbinenschaufel 1 mit einer bereits auf der Oberfläche 10 abgeschiedenen Beschichtung 11. Da es für das Verständnis ausreicht, ist in den Fig.2 und 3 jeweils nur eine Bohrung 5 dargestellt.,

Zur Vorbereitng der Beschichtung wird die Turbinenschaufel 1 zunächst auf einer nicht dargestellten Halterung befestigt, mit welcher sie in die Beschichtungskammer eingeführt werden kann. Insbesondere bei Plasmaprozessen im Unterdruckbereich ist es dabei bevorzugt, wenn der Beschichtungskammer eine Vorkammer vorgelagert ist, aus der heraus die zu beschichtende Turbinenschaufel 1 mittels der Halterung durch eine Schleusenwand in die Beschichtungskammer eingeführt werden kann. Eine solche Anlage mit Vorkammer ist beispielsweise in der EP-A-1 006 211 offenbart.

Die Halterung bzw. der Fuss 3 der Turbinenschaufel 1 wird nun mit einer Quelle verbunden, in der ein Edelgas, vorzugsweise Argon, vorrätig ist. Die Verbind erfolgt dabei derart, dass das Argon aus der Quelle heraus durch den Fuss 3 der Turbinenschaufel 1 durch die mindestens eine Kühlluftbohrung 5 strömen kann, in sinngemäss gleicher Weise wie während des Betriebs der Turbine das Kühlmedium die Turbinenschaufel 1 durchströmt. Vorzugsweise ist natürlich eine Mehrzahl von Kühlluftbohrungen 5 vorgesehen, welche dann alle während des Beschichtens von dem Argon durchströmt werden, so wie es die Pfeile ohne Bezugszeichen in den Fig. 2 und 3 andeuten.

Der Druck in der Beschichtungskammer wird auf den gewünschten Prozessdruck von weniger als 10 000 Pa, vorzugsweise einen Wert zwischen 50 Pa und 2000 Pa und speziell auf einen Wert zwischen 100 und 800 Pa gebracht.

Nachdem die Turbinenschaufel 1 bei dem gewünschten Prozessdruck in die Beschichtungskammer eingebracht worden ist, wird der Argonfluss durch die Kühlluftbohrung 5 gestartet, so wie dies die Pfeile ohne Bezugszeichen in den Fig. 2 und 3 andeuten. Nun wird mittels einer Plasmaspritzvorrichtung ein Ausgangsmaterilal für das Beschichten in Form eines Prozessstrahls auf die Turbinenschaufel 1 aufgespritzt , wobei das Ausgangsmaterial in ein den Prozessstrahl defokussierendes Plasma injiziert wird und dort zumindest teilweise in die gasförmige Phase übergeht. Das Beschichten der Turbinenschaufel 1 erfolgt nun durch Abscheidung aus der gasförmigen Phase, während das Argongas durch die Bohrung 5 strömt.

Das austretende Argon kann dabei zusätlich einen positiven Kühlungseffekt auf der Oberfläche 11 bewirken. Das Argon wird gemeinsam mit dem Prozessgas aus der Beschichtungskammer abgepumpt.

Bei einer alternativen Verfahrensführung wird der LPPS-TF-Prozess so durchgeführt, dass das Ausgangsmaterial in dem Plasma teilweise oder vollständig plastifiziert wird oder in die flüssige Phase übergeht und das Beschichten dann durch Abscheidung aus der flüssigen Phase erfolgt.

Während des Beschichtungsvorgangs verhindert das die Bohrung 5 durchströmende Argongas, dass sich Beschichtungsmaterial in der Bohrung 5 bzw. im Auslass 52 ablagert. Somit ist gewährleistet, dass jede Bohrung 5 nach Beendigung des thermischen Spritzens noch den gleichen Strömungsquerschnitt aufweist wie vor dem thermischen Spritzen.

Ein besonderer Vorteil des anhand von Fig. 2 und Fig. 3 erläuterten Verfahrens besteht darin, dass durch das während des thermischen Spritzens aus der Bohrung 5 ausströmende Fluid ein homogenerer, das heisst langsamerer Übergang vom Rand der Bohrung 5 zur Beschichtung 11 erfolgt. Wie dies Fig. 2 und Fig. 3 zeigt, nimmt die Dicke der Beschichtung 11 in dem mit B bezeichneten Bereich mit zunehmender Entfernung vom Auslass 52 der Bohrung 5 kontinuierlich zu bis sie ihren maximalen Wert d erreicht hat. Dieser langsame Anstieg der Beschichtung liegt darin begründet, dass während des Beschichtens in unmittelbarer Nähe des Auslass 52 das ausströmende Fluid die Ablagerung des Beschichtungsmaterials erschwert, wobei diese Erschwernis mit zunehmender Entfernung vom Auslass 52 abnimmt.

In Fig. 2 sieht man, dass bei einem senkrechten Einmünden der Bohrung 5 dieser kontinuierliche Anstieg der Dicke der Beschichtung symmetrisch erfolgt, also darstellungsgemäss auf beiden Seiten des Auslasses 52 der Bohrung 5.

Bei einer schrägen Einmündung der Bohrung 5 so wie sie in Fig. 3 dargestellt ist, prägt sich der abgeschrägte Anstieg der Beschichtung 11 im wesentlichen nur auf einer Seite, nämlich der darstellungsgemäss linken Seite des Auslasses 52 aus.

Dieses in Strömungrichtung gesehen langsame Ansteigen der Dicke der Beschichtung 11 hat auch für den Betrieb der Turbine Vorteile, weil hierdurch im Betriebszustand die aus der Kühlluftbohrung 5 austretende Kühlluft besser auf die Oberfläche der Turbinenschaufel 1 geleitet wird und Verwirbelungen am Auslass 52 der Bohrung 5 zumindest reduziert werden können.

## Patentansprüche

1. Verfahren zum Beschichten einer Fläche (10) eines Körpers (1), welcher mindestens eine durchgängige Bohrung (5) mit einem Einlass (51) und mit einem Auslass (52) aufweist, wobei der Auslass (52) in der zu beschichtenden Fläche (10) vorgesehen ist, bei welchem Verfahren das Beschichten mittels thermischen Spritzens erfolgt, **dadurch gekennzeichnet, dass** während des thermischen Spritzens die Bohrung (5) von einem Fluid durchströmt wird, welches durch den Auslass (52) der Bohrung (5) ausströmt und eine durch das Beschichten verursachte Verengung der Bohrung (5) im Wesentlichen verhindert.

2. Verfahren nach Anspruch 1, bei welchem das Fluid ein Gas ist, insbesondere ein Edelgas und speziell Argon.

3. Verfahren nach einem der vorangehenden Ansprüche, bei welchem die Flussrate des Fluids höchstens 5 SLPM ist und vorzugsweise höchstens 1 SLPM beträgt.

4. Verfahren nach einem der vorangehenden Ansprüche, bei welchem das thermische Spritzen ein Plasmaspritzverfahren ist.

5. Verfahren nach einem der vorangehenden Ansprüche, bei welchem das thermische Spritzen ein Plasmaspritzverfahren ist, das bei einem Prozessdruck durchgeführt wird, der kleiner als 10 000 Pa beträgt.

6. Verfahren nach Anspruch 5, bei welchem für den Prozessdruck ein Wert zwischen 50 und 2000 Pa, vorzugsweise zwischen 100 und 800 Pa gewählt wird.

7. Verfahren nach Anspruch 5 oder 6 bei welchem ein Ausgangsmaterial für das Beschichten in Form eines Prozessstrahls auf den Körper (1) aufgespritzt wird, wobei das Ausgangsmaterial in ein den Prozessstrahl defokussierendes Plasma injiziert und dort teilweise oder vollständig in eine flüssige Phase übergeht und wobei das Beschichten durch Abscheidung aus der flüssigen Phase erfolgt.

8. Verfahren nach Anspruch 4 oder 5, bei welchem ein Ausgangsmaterial für das Beschichten in Form eines Prozessstrahls auf den Körper (1) aufgespritzt wird, wobei das Ausgangsmaterial in ein den Prozessstrahl defokussierendes Plasma injiziert und dort zumindest teilweise in eine gasförmige Phase übergeht und wobei das Beschichten durch Abscheidung aus der gasförmigen Phase erfolgt.

9. Verfahren nach einem der vorangehenden Ansprüche, bei welchem der Körper eine Turbinenschaufel (1) ist und die mindestens eine Bohrung eine Kühlluftbohrung (5) ist.

10. Verfahren nach Anspruch 9, bei welchem die Turbinenschaufel (1) einen Fuss (3) aufweist, der während des Beschichtens mit einer Quelle für das Fluid verbunden ist, sodass das Fluid vom Fuss (3) der Turbinenschaufel (1) durch die mindestens eine Kühlluftbohrung (5) zu dem Auslass (52) der Kühlluftbohrung (5) strömen kann.

11. Verfahren nach Anspruch 10, bei welchem die Turbinenschaufel (1) eine Mehrzahl von Kühlluftbohrungen (5) aufweist, welche von dem Fluid durchströmt werden.

12. Turbinenschaufel beschichtet gemäss einem Verfahren nach einem der Ansprüche 1-11.

13. Turbinenschaufel nach Anspruch 12, wobei die Kühlluftbohrung (5) schräg in die zu beschichtende Fläche (10) einmündet.

14. Turbinenschaufel nach Anspruch 12, wobei die Dicke der Beschichtung (11) mit zunehmender Entfernung vom Auslass (52) der Bohrung (5) zunimmt, bis sie ihren maximalen Wert (d) erreicht hat.
